# EUROPEAN PATENT APPLICATION

(11) **EP 0 538 026 A1**
(43) Date of publication of application: **21.04.1993**
(21) Application number: 92309397.5
(22) Date of filing: 15.10.1992
(51) Int. Cl.: C22B 3/08, C02F 5/14

(54) **Method for controlling calcium sulfate scaling in metal mining circuits**

(30) Priority: 15.10.1991 US 776936
(71) Applicant: Calgon Corporation, Pittsburgh, Pennsylvania (US)
(72) Inventor: Alfano, Nicholas J., Pittsburgh, PA 15241 (US)
(74) Representative: McCormack, Derek James

(57) **Abstract**

A method for controlling the formation of calcium sulfate scale deposits in metal mining oxidation circuits, particularly pressure oxidation circuits, by adding an effective amount, preferably at least 0.1 ppm, of a composition containing an acrylic acid-type polymer, or salt thereof, an aminomethylenephosphonic acid or phosphonate, such as hexamethylenediamine tetramethylene phosphonic acid and, optionally, a carboxylic/sulfonic polymer, or salt thereof, to an aqueous ore slurry.

## Description

### BACKGROUND OF THE INVENTION

Most industrial waters contain alkaline earth metal cations, such as calcium, barium, magnesium,-etc. and several anions such as bicarbonate, carbonate, sulfate, oxalate, phosphate, silicate, fluoride, etc. When combinations of these anions and cations are present in concentrations which exceed the solubility of their reaction products, precipitates form until these product solubility limitations are no longer exceeded. For example, when calcium ion and sulfate ion concentrations exceed the solubility of their calcium sulfate reaction products, a solid phase of calcium sulfate will form.

Solubility concentrations are exceeded for various reasons, such as partial evaporation of the water phase, a change in pH, pressure or temperature, or the introduction of additional ions which form insoluble compounds with the ions already present in the solution.

As these reaction products precipitate on surfaces of an aqueous system, they form scale or deposits. This accumulation prevents effective heat transfer, interferes with fluid flow and facilitates corrosive processes and biological activity. Scaling is an expensive problem in many industrial systems, causing delays and shutdowns for cleaning and removal.

Calcium sulfate scaling is particularly troublesome in the mining of refractory grade ores using oxidation methods such as pressure oxidation wherein aqueous ore slurries are oxidized under high temperature and pressure conditions to prepare the ore for leaching.

U.S. Pat. No. 3,928,196 discloses the use of copolymers of 2-acrylamido-2-methylpropylsulfonic acid and acrylic acid as scale inhibitors.

U.S. Pat. No. 4,640,793 discloses the use of admixtures containing carboxylic acid/sulfonic acid polymers and phosphonates or polycarboxylates as scale and corrosion inhibitors.

U.S. Pat. No. 4,618,448 discloses the use of polymers comprising an unsaturated carboxylic acid, an unsaturated sulfonic acid and an unsaturated polyalkylene oxide as scale inhibitors.

U.S. Pat. No. 4,933,090 discloses the use of hexamethylenediamine tetramethylenephosphonic acid and diethylene pentamethylenephosphonic acid in combination with carboxylic/sulfonic acid polymers to control silica/silicate deposition.

Compositions containing hexamethylenediamine tetramethylenephosphonic acid, polyacrylic acid and a carboxylic/sulfonic acid polymer are used in papermaking to control calcium sulfate scaling.

European Publication No. 302651B1 discloses the use of carboxylic acid/sulfonic acid copolymers in combination with organic phosphonates and acrylic acid-type polymers as calcium carbonate scale inhibitors in highly alkaline aqueous systems.

None of these references, however, disclose or suggest the instant invention, which relates to calcium sulfate control in ore slurries mining circuits.

Treatment of such mining circuits involves the addition of a scale inhibitor to an ore slurry, which is distinct from traditional cooling water scale inhibition applications.

### SUMMARY OF THE INVENTION

The present invention relates to the control of calcium sulfate scaling in aqueous metal mining circuits such as those utilized in the precious,metal mining industry. More particularly, the instant invention relates to the control of calcium sulfate scaling in metal mining oxidation circuits wherein sulfide grade ores are oxidized, for example by flash chlorination, roasting with air, or pressure oxidation, thereby making sulfide-grade ores amenable to leaching processes.

Typically, a sulfide grade ore is ground and treated with sulfuric acid to reduce the carbonate and the carbon dioxide content of the ore. The resulting slurry, which generally could contain up to about 40 weight percent solids, is then oxidized via various means. For example, oxidation may occur in an autoclave under high temperature (e.g., greater than 400°F) and high pressure conditions (e.g., greater than 400 psi). This is known as pressure oxidation. The oxidized slurry, at a pH of about 1.0, is then cooled and neutralized to a pH of about 10.0. For further details on pressure oxidation, see Matthews and Hensen "Pressure Oxidation at FirsMiss Gold's Getchell Mine", Mining Engineering, Sept., 1991, pgs. 1121-23.

Calcium sulfate scaling is troublesome in all oxidation circuits wherein sulfide grade ores are oxidized. For example, scaling occurs in autoclaves, flash chlorination vessels and roasters and on clarifier rakes, pumps and related piping. This invention is an effective method for inhibiting calcium sulfate scaling in aqueous metal mining circuits, such as oxidation circuits, which utilizes an effective amount of a composition comprising: a) an acrylic acid-type polymer; b) an aminomethylenephosphonic acid or phosphonate; and c) optionally, a carboxylic/ sulfonic acid polymer; to control scaling in mining aqueous systems. These compositions are used as process additives. Thus, they are added directly to aqueous ore slurries to inhibit calcium sulfate scaling.

For example, in the severe environment of a pressure oxidation circuit, conventional scale inhibitors such as polymaleates and polyacrylic acid have generally proven to be ineffective as calcium sulfate scale inhibitors. By contrast, the instant compositions effectively control calcium sulfate scaling in pressure oxidation and other mining circuits.

### DETAILED DESCRIPTION OF THE INVENTION

The instant invention is directed to a method for inhibiting calcium sulfate scaling in an aqueous metal mining circuit, particularly an oxidation mining circuit, comprising adding to said aqueous circuit an effective amount of a composition comprising:
(A) about 0.1 to about 30%, based on total composition weight, of a polymer selected from the group consisting of: homopolymers of acrylic acid, homopolymers of methacrylic acid, polymers comprising acrylic acid and methacrylic acid, hydrolyzed polyacrylamides, and salts thereof;
(B) about 0.1 to about 30%, based on total composition weight, of an aminomethylene phosphonic acid or phosphonate, such as hexamethylenediamine tetramethylene phosphonic acid (AM₆P); and
(C) optionally, about 0.1 to about 30%, based on total composition weight, of a water soluble polymer having a.molecular weight of less than about 50,000, prepared from:
   (a) about 5 to about 95%, by weight, of an unsaturated carboxylic acid, or its salt; and
   (b) about 95 to 5%, by weight, of an unsaturated sulfonic acid, or its salt; and
(D) the balance water.

In a more specific embodiment of this invention, the instant compositions are added to an aqueous ore slurry in an oxidation mining circuit such as a pressure oxidation circuit.

Preferably, the instant compositions comprise about 3 to about 25% of A; about 1 to about 10% of B; about 3 to about 25% of C, and the balance water.

Aqueous compositions comprising components A), B), and optionally C) above in combination with a sulfide grade ore slurry in an oxidation circuit are also claimed.

An effective amount of the instant compositions should be added to the ore slurry being treated. As used herein, the term "effective amount" refers to that amount of an above-defined composition necessary to inhibit, control or substantially prevent calcium sulfate scaling at the severe pH, temperature and pressure conditions of aqueous metal mining circuits, particularly metal mining oxidation circuits. Generally, the effective amount will range from about 0.1 to about 400 ppm of the instant compositions, based on the total weight of the ore slurry being treated, preferably from about 1.0 to about 50 ppm.

As used herein, the term "inhibiting calcium sulfate scaling" encompasses threshold precipitation inhibition, stabilization, dispersion, solubilization, sequestration, reducing adherence of scale to system surfaces and/or particle size reduction. Thus, the inventor has discovered that the instant compositions effectively inhibit calcium sulfate scaling under severe operating conditions, and intend that the instant specification describe this phenomena, without attempting to describe the specific mechanism by which calcium sulfate scaling is inhibited.

The term "aqueous system", as used herein, is meant to include any type of aqueous mining system prone to calcium sulfate deposition, and specifically includes ore slurries of oxidation mining circuits such as pressure oxidation circuits. Oxidation circuits are most commonly found in gold and copper mining operations, among others. These ore slurries generally contain up to about 40% solids.

Component A is a water soluble polycarboxylate selected from the group consisting of polymers prepared from acrylic acid, methacrylic acid, vinyl acetic acid, allyl acetic acid, fumaric acid, maleic acid or anhydride, itaconic acid, alpha-halo acrylic acid and beta-carboxyethyl acrylate. Preferably, component A is selected from the group consisting of water soluble homopolymers of acrylic acid, water soluble homopolymers of methacrylic acid, water soluble polymers of acrylic acid and methacrylic acid, hydrolyzed polyacrylamides and salts thereof, wherein the molecular weight is less than about 50,000, preferably about 1,000 to about 25,000. Such polymers are commercially available from Calgon Corporation, Pittsburgh, PA.

Component B is any aminomethylenephosphonic acid or aminomethylenephosphonate of the following structure: 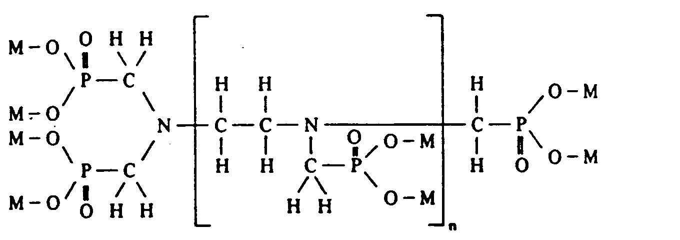
wherein n is 0 - 10, preferably 4-10 and most preferably 4 and wherein M is any suitable counterion, preferably H or Na. Thus, the most preferred compounds for use in the following compositions are hexamethylenediamine tetramethylenephorphonic acid or its sodium salt. The acid form, AM₆P, is commercially available from Monsanto (Dequest 2060).

To prepare the polymer of component C, any unsaturated carboxylic acid or salt may be used in combination with any sulfonic acid which can be copolymerized with the carboxylic acid. Examples of suitable unsaturated carboxylic acids include acrylic acid, methacrylic acid, alpha halo acrylic acid, maleic acid, itaconic acid, vinyl acetic acid, allyl acetic acid, fumaric acid, betacarboxyethyl acrylate, their salts and admixtures thereof. The preferred carboxylic acids are acrylic acid and methacrylic acid and their salts.

Examples of suitable unsaturated sulfonic acids which can be used to prepare the polymer of component C include 2-acrylamido-2-methylpropylsulfonic acid, 2-methacrylamido-2-methylpropylsulfonic acid, styrene sulfonic acid, vinyl sulfonic acid, sulfo alkyl acrylate or methacrylate, allyl sulfonic acid, methallyl sulfonic acid, 3-methacrylamido-2-hydroxy propyl sulfonic acid acrylate, their salts and mixtures thereof. The most preferred sulfonic compounds are 2-acrylamido-2-methylpropylsulfonic acid, 2-methacrylamido-2-methylpropylsulfonic acid and their salts.

Optionally, an unsaturated polyalkylene oxide compound may be copolymerized with the above monomers to prepare the polymers of component C. Examples include allyl polyethylene glycol, methallyl polyethylene glycol, polyethylene glycol acrylate, polyethylene glycol methacrylate, methoxy allyl polyethylene oxide, alkoxyallyl polyethylene oxide and the polypropylene equivalents thereof. Also, mixtures of polyethers formed from polyethylene oxide with other polyalkylene oxides, such as propylene or butylene oxide may be used. The polyether chain may be capped with an alkyl, aralykyl, sulfonate or phosphonate group metal or ion, or uncapped.

Mixtures of the various monomers may be used, and nonionic monomers (such as acrylamide, methacrylamide and acylonitrile) may also be present in the component C) polymers.

Generally, the component C) polymers are water soluble and are prepared using about 5 to about 95%, preferably about 20-80%, by weight, of the unsaturated carboxylic acid or salt thereof and about 95 to about 5%, preferably about 80-20%, by weight, of the unsaturated sulfonic acid or salt thereof. Optionally, about 5 to about 40%, preferably 10-30%, by weight, of an unsaturated polyalkylene oxide compound may be present. The component C) polymers should have molecular weights of less than about 50,000, preferably from about 1,000 to about 25,000.

The preferred polymers for component C are water soluble polymers prepared from:
(a) about 80 to 20%, by weight, of an unsaturated carboxylic compound selected from the group consisting of acrylic acid, methacrylic acid, their salts and mixtures thereof; and
(b) about 20 to about 80%, by weight, of an unsaturated sulfonic compound selected from the group consisting of 2-acrylamido-2-methylpropyl sulfonic acid, 2-methacrylamido-2 -methylpropylsulfonic acid, their salts and mixtures thereof.

Most preferably, component C is about 50 to 75%, by weight, acrylic acid or its salt, and about 25 to about 50%, by weight, 2-acrylamido-2-methylpropylsulfonic acid, or its salt. Such polymers are commercially available from Calgon Corporation as TRC-233.

The balance of the instant compositions is water. Additionally, other conventional treatment agents, including, for example, surfactants or wetting agents, can be used with the instant compositions and method. The addition of caustic soda may also be desirable.

The compositions disclosed herein effectively control calcium sulfate scaling in mining circuits such as pressure oxidation circuits.

### EXAMPLES

The following examples further demonstrate the instant invention. These examples are not intended to limit the scope of this invention in any way.

### Example 1

An aqueous scale inhibiting composition representing the best mode known to the inventor was formulated.

This composition contained:
A) about 150 weight units (active basis) of a low molecular weight (i.e., less than 25,000) homopolymer of acrylic acid;
B) about 50 weight units (active basis) of hexamethylenediamine tetramethylenephosphonic acid (AM₆P);
C) about 50 weight units (active basis) of a low molecular weight (i.e., less than 25,000) 60/40 w/w copolymer of acrylic acid and 2-acrylamido-2-methylpropyl sulfonic acid;
D) about 100 weight units of 50% caustic soda; and
E) about 700 weight units of water.

This composition is a stable formulation which is effective as a calcium sulfate inhibitor in aqueous mining circuits. In preparing such compositions, order of addition is not believed to be critical.

### Example 2

In the thickening operation of a roaster in a gold mining circuit, the dilute pulp coming from the hydraulic classifiers in the ball mill is concentrated in a thickener. A rake continuously moves the thickened pulp. Sulfitous ores that are milled caused CaSO₄ to deposit on the rake, reducing thickener efficiency. Polymaleate was ineffective in controlling CaSO₄ deposits on rake.

In an on site trial, the addition of 8-20 ppm of the composition of Example 1 prevented scale buildup in a side stream loop coming from the thickener. Polymaleate did not prevent CaSO₄ scale buildup in the side stream loop.

## Claims

1. A method for inhibiting calcium sulfate scaling in an aqueous mining circuit comprising adding to said circuit an effective amount of a composition comprising:
(A) about 0.1 to about 30%, based on total composition weight, of a water-soluble polymer having a molecular weight less than about 50,000 selected from the group consisting of: homopolymers of acrylic acid and salts thereof, homopolymers of methacrylic acid and salts thereof, polymers comprising acrylic acid and methacrylic acid and salts thereof, and hydrolyzed polyacrylamides and salts thereof; and
(B) about 0.1 to about 30%, based on total composition weight, of an aminomethylenephosphonic acid or an aminomethylenephosphonate ;
(C) optionally, about 0.1 to about 30%, based on total composition weight, of a water soluble polymer having a molecular weight of less than about 50,000 prepared from:
(a) about 5 to about 95%, by weight, of an unsaturated carboxylic acid, or its salt; and
(b) about 95 to about 5%, by weight, of an unsaturated sulfonic acid, or its salt;
(D) the balance water.

2. The method of Claim 1, wherein A is about 3 to about 25%, by weight, B is about to about 10%, by weight, and C is about 3 to about 25%, of said composition.

3. The method of Claim 2, wherein (C) is a water soluble polymer prepared from:
a) about 20 to 80%, by weight, of an unsaturated carboxylic compound selected from the group consisting of acrylic acid, methacrylic acid, their salts and mixtures thereof; and
b) about 80 to about 20%, by weight, of an unsaturated sulfonic compound selected from the group consisting of 2-acrylamido-2-methylpropyl sulfonic acid, their salts and mixtures thereof;
and wherein (B) is hexamethylenediamine tetramethylenephosphonic acid.

4. The method of Claim 3, wherein A is a homopolymer of acrylic acid.

5. The method of Claim 4, wherein C is about 50 to 75%, by weight acrylic acid and about 25 to 50%, by weight, 2-acrylamido-2-methylpropyl sulfonic acid.

6. The method of Claim 5, wherein said effective amount is from about 0.1 to about 400 ppm.

7. A composition comprising:
I) an ore slurry in an aqueous mining circuit; and
II) about 0.1 to about 400 ppm, based on the total weight of I), of a composition comprising:
A) about 0.1 to about 30%, based on the weight of II, of a water-soluble polymer having a molecular weight of less than about 50,000 selected from the group consisting of: homopolymers of acrylic acid and salts thereof, homopolymers of methacrylic acid and salts thereof, polymers comprising acrylic acid and methacrylic acid and salts thereof, and hydrolyzed polyacrylamides and salts thereof; and
B) about 0.1 to about 30%, by weight, of an aminoemthylenephosphonic acid or aminomethylenephosphonate;
C) optionally, about 0.1 to about 30%, based on the weight of II, of a water-soluble polymer having a molecular weight of less than about 50,000 prepared from:
(a) about 5 to about 95%, by weight, of an unsaturated carboxylic acid, or its salt; and
(b) about 95 to about 5%, by weight, of an unsaturated sulfonic acid, or its salt;
D) the balance water.
